# EUROPEAN PATENT APPLICATION

(11) **EP 4 342 735 A1**
(43) Date of publication of application: **27.03.2024**
(21) Application number: 22197557.6
(22) Date of filing: 23.09.2022
(51) Int. Cl.: B60R 1/00

(54) **AUXILIARY SAFETY DEVICE FOR VEHICLES, AND VEHICLE COMPRISING SUCH AUXILIARY SAFETY DEVICE**

(71) Applicant: Volvo Truck Corporation, 405 08 Göteborg (SE)
(72) Inventor: Sternbåge, Martin, 439 35 Onsala (SE); Cider, Lennart, 441 95 Alingsås (SE); Larsson, Lena, 426 74 VÄSTRA FRÖLUNDA (SE); Ljungqvist, Gustaf, 442 94 Ytterby (SE); Malm, Daniel, 424 71 Olofstorp (SE); Elofsson, Stig, 449 41 Nol (SE); Persson, Dennis, 434 40 Kungsbacka (SE); Änggren, Glenn, 439 54 Åsa (SE); Torstensson, Dennis, 67170 Edane (SE); Halstensen, Jan-Erik, 67396 Åmotfors (SE); Liljemark, Mattias, 671 98 Arvika (SE); Johansson, Andreas, 67195 Klässbol (SE); Håkansson, Alexander, 448 33 Floda (SE)
(74) Representative: Lavoix

(57) **Abstract**

Auxiliary safety device (1) for a vehicle (100), comprising:
- a housing (3) suitable to be mounted on board of the vehicle (100);
- a lighting assembly (5) which is at least partially accommodated in the housing (3) and comprises at least a plurality of lights (7) arranged to illuminate a space ahead of the vehicle (100);
- a video assembly (9) which is at least partially accommodated in the housing (3) and comprises one or more video cameras monitoring at least part of the environment outside the vehicle (100) to detect one or more of humans, animals or objects ahead of the vehicle, wherein the video assembly (9) comprises at least one thermal video camera (11) which detects at least humans/animals ahead of the vehicle (100) under poor visibility conditions;
- a controller (12) which at least causes the plurality of lights (7) to flash or strobe at a human, or animal or obstacle detected by the video assembly (9).

## Description

### TECHNICAL FIELD

The present disclosure relates generally to the field of safety for vehicles. In particular aspects, the disclosure relates to an auxiliary safety device for vehicles, and to a vehicle comprising such auxiliary safety device.

The present disclosure is particularly suitable for being applied to heavy-duty vehicles, such as trucks, and will be described by making more specific reference to such type of vehicles without intending in any way to limit its possible application to other types of heavy-duty vehicles, such as buses, construction vehicular equipment, as well as to other types of more general vehicles, such as pick-ups, vans, cars, et cetera.

Hence, the aspects of the present disclosure are not restricted to any particular vehicle.

### BACKGROUND

As known, when driving a vehicle, safety is of outmost importance.

To this end, over the years vehicles have been equipped more and more with systems and devices aimed at helping drivers under various driving conditions.

For instance, back and especially head lights have been rendered more effective and performing, there have been developed sophisticated control systems to help drivers in keeping the lane or in maintaining a safety distance from a preceding vehicle, et cetera.

Notwithstanding, there is still room and desire for further improving safety when driving.

### SUMMARY

The present disclosure is aimed at providing a solution to this end and provides an auxiliary device which enhances safety and also comfort of drivers, in particular when the driving conditions are not optimal, namely when visibility is reduced due for example to bad weather conditions and/or at night.

In particular, according to an aspect of the disclosure, there is provided an auxiliary device for a vehicle comprising:
- a housing suitable to be mounted on board of the vehicle;
- a lighting assembly which is at least partially accommodated in the housing and comprises at least a plurality of lights arranged to illuminate a space ahead of the vehicle;
- a video assembly which is at least partially accommodated in the housing and comprises one or more video cameras monitoring at least part of the environment outside the vehicle to detect one or more of humans, animals or objects ahead of the vehicle, wherein the video assembly comprises at least one thermal video camera which detects at least humans/animals ahead of the vehicle at least under poor visibility conditions;
- at least one controller which at least causes the plurality of lights to flash or strobe at a human/animal or obstacle detected by the video assembly.

In this way, the auxiliary device integrates into a substantially stand-alone single device the capability of properly illuminating the space ahead of the proceeding vehicle substantially farther ahead of the usual headlights, and of video monitoring the space ahead, thus allowing for example to identify as early as possible the presence of humans/animals also under poor visibility conditions, e.g. at night.

In certain examples, the auxiliary safety device comprises one or more of the following features, which may be combined in any technical feasible combination:
- the at least one controller generates an alert indicative of the presence, ahead of the vehicle, of at least one human or animal or object detected by the video assembly;
- the at least one controller activates a haptic feedback for the driver of the vehicle indicative of the presence ahead of the vehicle of at least one human or animal or object detected by the video assembly;
- the at least one controller activates at least one speaker mounted onboard of the vehicle to emit sound when the presence ahead of the vehicle of at least of at least one human or animal or object has been detected;
- the video assembly further comprises a Dash cam which monitors at least part of the environment around the vehicle, in particular when left unattended;
- the Dash cam activates an alarm of the vehicle and/or outputs an alarm message when detecting an individual touching or being in proximity of the vehicle;
- the lighting assembly comprises at least one light sensor which turns off or causes the plurality of lights to be turned off when detecting light of any vehicle upcoming from an opposite direction;
- the lighting assembly comprises at least one sensor which causes the plurality of lights to be adjusted vertically up and down or to be turned off when detecting that the vehicle is proceeding uphill along a path having an inclination above a predetermined threshold;
- the plurality of lights comprises a plurality of dimmable lights;
- the plurality of lights comprises a plurality of LEDs;
- the auxiliary safety device further comprises a cleaning apparatus for cleaning and/or heating at least part of the light assembly and/or the video assembly;
- the auxiliary safety device further comprises a localization device which tracks at least the position of the safety auxiliary device.

Hence, thanks to one or more of the above features, the integrated auxiliary device according to the disclosure enhances safety, visibility and comfort for drivers.

According to another aspect of the disclosure, there is provided a vehicle comprising an auxiliary safety device as above indicated, and in particular as defined in the appended claims.

In certain examples, the auxiliary safety device is installed at a position higher than that of the driver's seat.

In one aspect, the auxiliary safety device is installed on the roof of the vehicle.

In one aspect, the vehicle is a heavy duty vehicle, in particular a truck.

In this way, with vehicles equipped with the auxiliary device according to the disclosure, the field of vision of the video assembly and the space illuminated by the light assembly extend substantially ahead of the vehicle with respect to the usual illuminating system used today, thus offering to drivers a better and longer visibility, as well as the capability of identifying potential risks on the road well in advance.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

With reference to the appended drawings, below follows a more detailed description of aspects of the disclosure cited as examples.
FIG. 1 is a view schematically illustrating an auxiliary safety device according to one example.
FIG. 2 is a view schematically illustrating the exemplary auxiliary device of FIG. 1 installed on the roof of the driver's cabin of a truck.
FIG. 3 schematically illustrates an interior part of the cabin of a truck.

### DETAILED DESCRIPTION

Aspects set forth below represent the necessary information to enable those skilled in the art to practice the disclosure.

It should be noted that in order to clearly and concisely describe the present disclosure, the drawings may not necessarily be to scale and certain features of the disclosure may be shown in somewhat schematic form.

Further, the terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be also understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled", "operatively connected" or "operatively coupled", to another element, it can be directly connected or coupled to the other element, or intervening elements may be present, or that there may be a functional coupling there between, namely an action of an element, such as a displacement, a rotation et cetera, may trigger or result in an action of the other element operatively coupled therewith. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

In particular, when the term "adapted" or "arranged" or "configured" or "shaped", or any similar/equivalent term is used herein while referring to any component as a whole, or to any part of a component, or to a combination of components, it has to be understood that it means and encompasses correspondingly either the structure, and/or configuration and/or form and/or positioning of the related component or part thereof, or combinations, such term refers to.

For instance, for electronic and/or software means, each of the above listed terms means and encompasses electronic circuits or parts thereof, as well as stored, embedded or running software codes and/or routines, algorithms, or complete programs, suitably designed for achieving the technical results and/or the functional performances for which such means are devised within the context of the present disclosure.

As it will become more evident from the following description, in some aspects the present disclosure provides an auxiliary device which enhances safety and also comfort of drivers, in particular when the driving conditions are not optimal, namely when visibility is reduced due for example to bad weather conditions and/or at night.

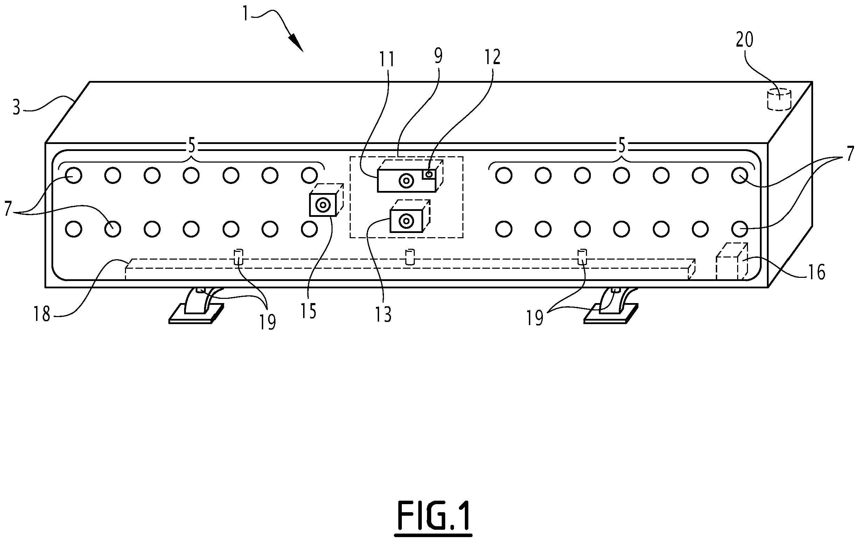

FIG. 1 is a view schematically illustrating an auxiliary safety device according to one example, therein indicated by the overall reference number 1.

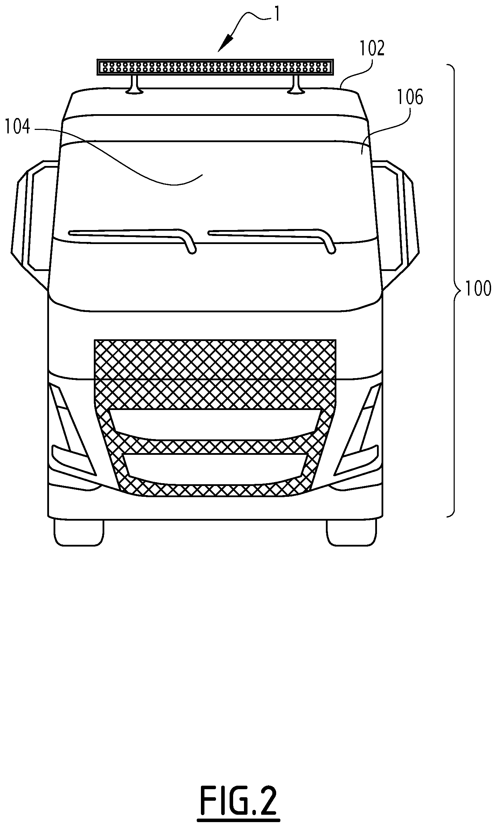

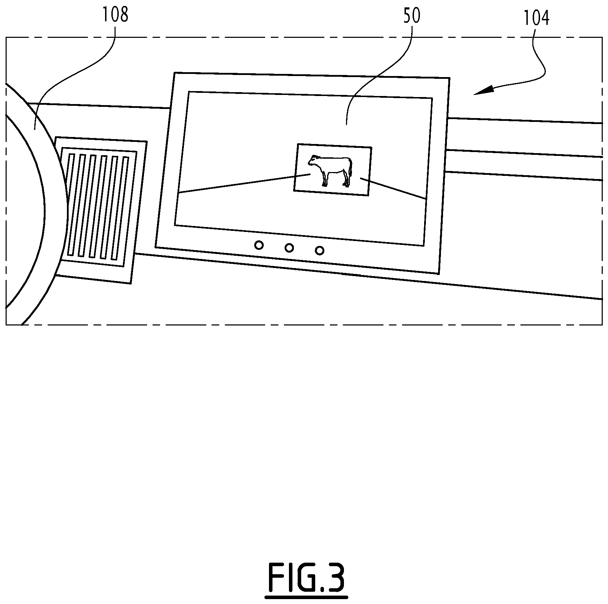

FIG. 2 illustrates the auxiliary safety device 1 installed on the roof 102 of the driver's cabin 104 of a truck 100 according to one possible aspect, and FIG. 3 schematically illustrates an interior part of the cabin 104 of the truck 100.

Clearly, the illustrated truck 100 represents just a possible example of a vehicle on which the auxiliary device 1 can be installed. Indeed, the auxiliary safety device 1 can be mounted in principle on any type of vehicle, either a new one or one already on the market.

Further, as those skilled in the art would easily appreciate from the following description, the auxiliary safety device 1 can be installed on a vehicle in any suitable position, in particular above the steering wheel of the vehicle 100, for example at a front part of the vehicle and above the line of sight of the driver, e.g. on the roof 102 outside the cabin 104 as illustrated in FIG. 1, at a sun visor, embedded inside the front part just above the windscreen 106, et cetera.

Further, as it will become readily apparent from the following description, the auxiliary device 1 according to the present disclosure can be easily sizable according to the type and size of vehicle on which it has to be installed.

In some aspects, the auxiliary device 1 comprises:
- a housing 3 suitable to be mounted on board of a vehicle, such as an exemplary truck illustrated in FIG. 2 by the reference number 100;
- a lighting assembly 5 and a video assembly 9 which are at least partially accommodated in the housing 3; and
- at least one controller, schematically indicated in figure 1 by the reference number 12.

The housing 3 can be made of any suitable material and, according to a possible example, can be realized substantially waterproof, e.g. with a grade of protection IP6X.

In one possible example, the lighting assembly 5 comprises at least a plurality of lights 7 arranged to illuminate a space ahead of the vehicle 100.

In some aspects, and as it will be result more in details in the following description, the video assembly 9 is arranged to monitor at least part of the environment outside the vehicle 100 and to record images and/or to transmit video streams of the monitored environment, for instance to a display mounted in the vehicle 100, schematically indicated in FIG. 3 by the reference number 50.

The video assembly 9 comprises one or more video cameras monitoring at least part of the environment outside the vehicle 100 to detect one or more of humans, animals or objects ahead of the vehicle, and in particular at least one thermal video camera 11, e.g. a night vision thermal video camera, configured to detect at least humans/animals ahead of the vehicle 100 at least under poor visibility conditions.

The definition of poor visibility has to be interpreted in the broadest sense possible as compared with normal visibility condition, i.e. when driving with daylight and reasonably good weather conditions. Hence, the definition of poor visibility conditions includes driving at night, under rain or snowing or foggy or similar weather conditions reducing visibility, and more in general conditions where head/back lights and/or wipers should be used.

For example, an object detected can be constituted in particular by a moving object, such as a slow vehicle ahead of the vehicle 100, i.e., an LGF sign, a bicycle or a moped.

For example, a human or animal can be detected by the thermal video camera 11 under poor visibility conditions, an object can be detected by any other camera comprised in the video assembly 9; under normal visibility conditions, any animal, human being, or object can be detected by the thermal video camera 11 itself and/or by any other video camera which may be used in the video assembly 9.

Usefully, the at least one controller 12 is configured at least to cause the plurality of lights 7 to flash or strobe at a human, or animal or obstacle detected by the video assembly 9.

In the example illustrated in figure 1, the at least one controller 12 is conveniently accommodated in the housing 3, and can be operatively associated to at least one of, preferably both the video assembly 9 and the light assembly 5.

As those skilled in the art may readily appreciate, the at least one controller may be placed outside the housing 3, e.g. in any suitable position onboard of the vehicle 100.

In some other examples, the auxiliary safety device 1 can comprise more controllers, for example one or more controllers configured to process the images/video streams captured by any of the cameras part of the video assembly, and one or more controllers adapted to implement proper actions responsive to the detection of any human, animal or object ahead of the vehicle, and/or one or more controllers associated to the light assembly 5 .

The controller 12 or each of the controllers used can be constituted by, or comprise, any suitable processor-based device, e.g. a processor of a type commercially available, suitably programmed and provided to the extent necessary with circuitry, in order to perform the functionalities devised for it/them within the frame of the auxiliary safety device 1 according to the present disclosure.

In one example, the at least one controller 12 is configured to generate an alert indicative of the presence, ahead of the vehicle 100, of at least one human or animal or object detected by the video assembly 9.

In this way, even at nights or under bad weather conditions, it is possible to identify in advance if, ahead of the direction where the vehicle 100 is proceeding, there is any human being or animal that may lead to a potentially dangerous situation. Thus, the driver is timely alerted and can react properly to the extent needed.

In one example, the at least one controller 12 is configured to activate a haptic feedback for the driver of the vehicle 100 indicative of the presence ahead of the vehicle 100 of at least one human, or animal or object detected by the video assembly 9, and in particular by the thermal video camera 11 under poor visibility conditions.

According to some examples, the haptic feedback can be activated for example on the steering wheel, indicated in FIG. 3 by the reference number 108, and/or on the driver's seat.

In one aspect, the at least one controller 12 is adapted to activate at least one speaker mounted onboard of the vehicle 100 to emit sound when the presence ahead of the vehicle 100 of at least one human or animal or object has been detected.

Clearly, the sound of the speaker can be activated in alternative or in addition to the haptic feedback.

In this way, the sound emitted can also "warn" a detected person or object of the approaching vehicle 100 and/or also cause an animal to step away.

In some aspects, the video assembly 9 further comprises a Dash cam, schematically represented in FIG. 1 by the reference number 13, which is adapted to monitor at least part of the environment around the vehicle 100, for instance when the vehicle 100 is parked and may be left unattended.

In one example, the Dash cam 13 is configured to activate, for example via the at least one controller 12 or by sending a control signal to a controller onboard of the vehicle 100, an alarm onboard of the vehicle 100 and/or to send an alarm message to a driver of the vehicle 100 when detecting an individual touching or being in close proximity of the vehicle 100.

In one aspect, for example when the vehicle 100 is left unattended, the Dash cam 13 can be activated by the driver to start video recording images of at least part of the environment around the vehicle 100 itself; the images recorded can be stored in any suitable memory unit embedded in the camera of coupled therewith.

In this way, the auxiliary safety device 1 also integrates the functionalities of a monitoring and alarm system.

Clearly, the Dash cam 13 or any other camera which may be used as part of the video assembly 9 can be used also during driving to capture images ahead of the vehicle 100.

According to one example, the lighting assembly 5 comprises at least one light sensor, schematically indicated in FIG. 1 by the reference number 15, which is configured to turn off or cause the plurality of lights 7 to be turned off when detecting light of any vehicle upcoming from an opposite direction.

For example, the light sensor 15 can send to the at least one controller 12 (or to any other controller operatively associated to the light assembly 5, a signal indicative of the vehicle approaching from the opposite direction; thus the controller can turn off the plurality of lights 7.

In this way, it is possible to avoid dazzling drivers approaching from the opposite direction, or in any case to warn a detected human/animal ahead of the vehicle 100.

According to some aspects, there could be only one light sensor 15 associated to all lights 7 as illustrated in FIG. 1, or there could be two or more light sensors 15 each associated to one or more lights 7, or each light can be associated to a corresponding light sensor 15.

In particular, in one example, the lighting system 5 comprises at least one light sensor and a controller with software which is configured to read, together with any camera of the video assembly 9, e.g. the Dash cam 13 and/or the thermal camera 13, on urban area road signs (city) or another system or map-based GPS position or AI - artificial intelligent smart software in the controller and/or computer server cloud service with mobile connection of GSM/GPRS/3G/4G/5G or another system to learn and to adaptively adjust thresholds and trigger function used to warn the driver when a human, or animal or obstacle has been detected.

The or each light sensor 15 can be external to the associated light(s) 7 or can be integrated inside the associated light(s) 7.

The lights 7 can be in any suitable number, and can be placed along one or more rows, or in any suitable configuration.

In one aspect, the plurality of lights 7 comprises a plurality of dimmable lights.

In this way, the intensity of illumination can be properly calibrated depending for example on the real time conditions.

In yet a further aspect, the plurality of lights 7 comprises a plurality of LEDs. Thus, an optimized control and energy efficiency is achieved.

Alternatively, other types of light emitting devices can be used.

In one aspect the lighting assembly 5 further comprises at least one sensor, schematically indicated in FIG. 1 by the reference number 16, which turns off the plurality of lights 7 or causes the plurality of lights to be turned off or adjusts or causes the plurality of lights to be adjusted vertically up and down, when detecting that the vehicle 100 is proceeding uphill along a path having an inclination above a predetermined threshold.

For example, the sensor 16 can send to the at least one controller 12 (or to any other controller operatively associated to the light assembly 5), a signal indicative of the vehicle 100 proceeding along an inclination above a predetermined threshold; then the controller can turn off or modify vertically the orientation of the plurality of lights 7.

In a further aspect, the safety auxiliary device 1 comprises a cleaning apparatus, schematically represented in Fig. 1 by the reference number 18, which is adapted to clean or and/or heat at least part of the light assembly 5 and/or of the video assembly 9.

For example, the cleaning apparatus 18 may comprise one or more inlets/outlets 19 for connection to a liquid or air pressure tank provided in the vehicle 100 or even inside the housing 3 itself.

In this way, air or liquid can be used for cleaning for example the lights 7 and/or the thermal video camera 11 and the Dash cam 13, for instance under raining or snowing conditions. Clearly, other cleaning components may be provided, e.g. a wiper, one or more warmers for heating up at least part or some components of the video assembly 9, the light assembly 5 and associated sensor(s) and/or controllers , et cetera.

In yet a further aspect, the safety auxiliary device 1 may comprise a localization device, schematically indicated in FIG. 1 by the reference number 20, which is configured to track and localize the vehicle 100, if stolen, or the safety auxiliary device 1 if for example dismounted from the vehicle 100 and stolen separately.

In some aspects, the safety auxiliary device 1 can be provided with a controller for supervising the tasks assigned to various components of the auxiliary device 1, according to solutions readily available to those skilled in the art and therefore not described herein in details, or it can be connected to a controller already provided on board of the vehicle on which it is installed

Further, the safety auxiliary device 1 can be provided with other components, such as cabling, relays, switches, power supply units et cetera, in order to allow its functioning and/or connection to various systems of the vehicle, for instance the power system and/or the light systems of the vehicle on which it is installed, other components to detected obstacles, such as lidars, radars, et cetera.

Such components and the ways they can be connected to the associated parts of the vehicle 100 are per se readily available to those skilled in the art and therefore not described herein in details.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. An auxiliary safety device (1) for a vehicle (100), comprising:
- a housing (3) suitable to be mounted on board of the vehicle (100);
- a lighting assembly (5) which is at least partially accommodated in the housing (3) and comprises at least a plurality of lights (7) arranged to illuminate a space ahead of the vehicle (100);
- a video assembly (9) which is at least partially accommodated in the housing (3) and comprises one or more video cameras monitoring at least part of the environment outside the vehicle (100) to detect one or more of humans, animals or objects ahead of the vehicle, wherein the video assembly (9) comprises at least one thermal video camera (11) which detects at least humans/animals ahead of the vehicle (100) under poor visibility conditions;
- a controller (12) which at least causes the plurality of lights (7) to flash or strobe at a human, or animal or obstacle detected by the video assembly (9).

2. The auxiliary safety device (1) according to claim 1, wherein the at least one controller (12) generates an alert indicative of the presence, ahead of the vehicle (100), of at least one human or animal or object detected by the video assembly (9).

3. The auxiliary safety device (1) according to claim 1 or 2, wherein the at least one controller (12) activates a haptic feedback for the driver of the vehicle (100) indicative of the presence ahead of the vehicle (100) of at least one human or animal or object detected by the video assembly (9).

4. The auxiliary safety device (1) according to one or more of the previous claims, wherein the at least one controller (12) activates at least one speaker mounted onboard of the vehicle (100) to emit sound when the presence ahead of the vehicle (100) of at least one human or animal or object has been detected.

5. The auxiliary safety device (1) according to one or more of the previous claims, wherein the video assembly (9) further comprises a Dash cam (13) which monitors at least part of the environment around the vehicle (100).

6. The auxiliary safety device (1) according to claim 5, wherein the Dash cam (13) activates an alarm of the vehicle (100) and/or outputs an alarm message when detecting an individual touching or being in proximity of the vehicle (100).

7. The auxiliary safety device (1) according to one or more of the previous claims, wherein the lighting assembly (5) comprises at least one light sensor (15) which turns off or causes the plurality of lights (7) to be turned off when detecting light of any vehicle upcoming from an opposite direction.

8. The auxiliary safety device (1) according to one or more of the previous claims, wherein the lighting assembly (5) comprises at least one sensor (16) which causes the plurality of lights to be adjusted vertically up and down or to be turned off when detecting that the vehicle (100) is proceeding uphill along a path having an inclination above a predetermined threshold.

9. The auxiliary safety device (1) according to one or more of the previous claims, wherein said plurality of lights (7) comprises a plurality of dimmable lights.

10. The auxiliary safety device (1) according to one or more of the previous claims, further comprising a cleaning apparatus (18) for cleaning and/or heating at least part of the light assembly (5) and/or the video assembly (9).

11. The auxiliary safety device (1) according to one or more of the previous claims, further comprising a localization device (20) which tracks at least the position of the safety auxiliary device (1).

12. A vehicle (100) comprising an auxiliary safety device (1) according to one or more of the previous claims.

13. The vehicle (100) according to claim 12, wherein the auxiliary safety device (1) is installed at a position higher than that of the steering wheel of the vehicle (100).

14. The vehicle (100) according to claim 12 or 13, wherein the auxiliary safety device (1) is installed on the roof of the vehicle (100).

15. The vehicle (100) according to one or more of the claims claim 12 to 14, wherein the vehicle (100) is a heavy duty vehicle, notably a truck.
